# EUROPÄISCHE PATENTSCHRIFT

(11) **EP 2 626 279 B1**
(45) Veröffentlichungstag und Bekanntmachung des Hinweises auf die Patenterteilung: **19.11.2014**
(21) Anmeldenummer: 13152615.4
(22) Anmeldetag: 25.01.2013
(51) Int. Cl.: B62D 15/02, G05D 1/02

(54) **Fahrerassistenzsystem zur Anpassung der Zielposition in Querparklücken durch den Fahrer**
Driver assistance system for adjusting the target position in transverse parking spots by the driver
Système d'assistance au conducteur pour adapter la position cible dans les stationnements perpendiculaires par le biais du conducteur

(30) Priorität: 09.02.2012 DE 102012201902
(43) Veröffentlichungstag der Anmeldung: 14.08.2013
(73) Patentinhaber: ROBERT BOSCH GMBH, 70442 Stuttgart (DE)
(72) Erfinder: Pampus, Christian, 71229 Leonberg (DE); Irion, Albrecht, 70563 Stuttgart (DE); Niemz, Volker, 71277 Rutesheim (DE)

(56) Entgegenhaltungen:
- EP-A1- 1 249 380
- EP-A1- 2 135 788
- EP-A2- 1 249 379
- WO-A1-2006/092370
- DE-A1-102008 019 346
- DE-A1-102008 027 692

## Beschreibung

Die vorliegende Erfindung betrifft ein Verfahren zum Bereitstellen einer Ausstiegsmöglichkeit aus einem Fahrzeug sowie ein Fahrerassistenzsystem für ein Fahrzeug zum Bereitstellen einer Ausstiegsmöglichkeit aus einem Fahrzeug.

### STAND DER TECHNIK

In der modernen Fahrzeugtechnik werden immer mehr Assistenzsysteme eingesetzt. Dabei sind insbesondere Einparksysteme bereits weit verbreitet. Diese Einparksysteme sind in der Lage, einen automatischen Einparkvorgang durchzuführen oder bei einem semi-automatischen Einparkvorgang den Fahrer eines Fahrzeuges zu unterstützen. Der Fahrer eines mit einem derartigen Einparksystem ausgestatteten Fahrzeuges wird dadurch deutlich entlastet. Einparksysteme weisen dabei insbesondere Sensorsysteme zum Vermessen der Umgebung des Fahrzeuges und zum Erkennen einer Parklücke sowie zumindest eine Auswerteeinheit auf, die, basierend auf den Sensordaten, die nötigen Fahrmanöver berechnet, um das Fahrzeug in der Parklücke abzustellen.

Ein derartiges System ist beispielsweise aus der DE 10 2007 002 262 A1 bekannt. Insbesondere ist bei diesem offenbarten Verfahren und der offenbarten Vorrichtung zur Unterstützung des Fahrers eines Fahrzeuges beim Einparken bekannt, dass durch den Fahrer die Zielposition des Fahrzeuges innerhalb einer bestimmten Parklücke mittels einer grafischen Bedieneinheit einstellbar ist.

Ein weiteres Einparksystem ist aus der EP 1 862 376 A2 bekannt, wobei auch bei diesem der Fahrer des Fahrzeuges die Zielposition des Fahrzeuges in der Parklücke vor dem Start des Einparkvorganges bei Bedarf korrigieren bzw. seinen Vorstellungen entsprechend anpassen kann. Ferner ist das in dieser Schrift offenbarte Verfahren nicht auf Einparkvorgänge beschränkt, sondern kann auch auf Rangiervorgänge Anwendung finden.

Insbesondere bei sehr kleinen Parklücken wird jedoch oftmals von einer Durchführung eines Einparkvorganges abgesehen, da zu befürchten ist, dass der verbleibende Abstand zwischen dem Fahrzeug und einem die Parklücke begrenzenden Objekt nicht ausreicht, um dem Fahrer bzw. dem Beifahrer des Fahrzeuges genügend Platz zum Aussteigen zu gewähren. Dadurch werden oftmals Parklücken, obwohl das Fahrzeug selbst darin Platz finden würde, nicht für das Parken des Fahrzeuges verwendet. Die Suche nach einem Parkplatz für das Fahrzeug wird somit unnötig verlängert. Ferner ergibt sich, insbesondere bei größeren Parkflächen, eine nicht optimale Ausnützung des zur Verfügung stehenden Raumes. Es können somit auf gleicher Fläche weniger Autos geparkt werden.

Aus der EP 1 249 379 A2 ist ein Verfahren zum automatischen Einparken eines Fahrzeugs bekannt, bei dem vorgesehen ist, dass das Fahrzeug vor dem autonom ausgeführten Einparkvorgang in eine sichere Position gebracht wird, so dass die Passagiere das Fahrzeug verlassen können.

Der nächstliegende Stand der Technik ist in der EP1 249 379 A2 zu sehen.

### OFFENBARUNG DER ERFINDUNG

Es ist daher Aufgabe der Erfindung, die voranstehend beschriebenen Nachteile bekannter Einparksysteme von Fahrzeugen zumindest teilweise zu beheben. Insbesondere ist es Aufgabe der vorliegenden Erfindung, ein Verfahren zum Bereitstellen einer Ausstiegsmöglichkeit aus einem Fahrzeug sowie ein Fahrerassistenzsystem für ein Fahrzeug zum Bereitstellen einer Ausstiegsmöglichkeit aus einem Fahrzeug anzugeben bzw. zu ermöglichen, welche in einfacher und kostengünstiger Weise die Nutzung von kleinen Parklücken ermöglichen.

Die voranstehende Aufgabe wird gelöst durch ein Verfahren mit den Merkmalen des unabhängigen Anspruchs 1 sowie durch ein Fahrerassistenzsystem mit den Merkmalen des unabhängigen Anspruchs 5. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrerassistenzsystem und jeweils umgekehrt, so dass bezüglich der Offenbarung zu den einzelnen Erfindungsaspekten stets wechselseitig Bezug genommen wird bzw. werden kann.

In einem ersten Aspekt der Erfindung wird die Aufgabe durch ein Verfahren zum Bereitstellen einer Ausstiegsmöglichkeit aus einem Fahrzeug gelöst. Insbesondere wird das Verfahren dabei durch folgende Verfahrensschritte gekennzeichnet:
a) Anhalten des Fahrzeuges vor einer Parklücke,
b) Bereitstellen der Ausstiegsmöglichkeit,
c) Autonomes Einparken des Fahrzeuges in die Parklücke.

Das Anhalten des Fahrzeuges vor der Parklücke kann dabei sowohl durch den Fahrer als auch automatisch durch ein Fahrerassistenzsystem erfolgen. Insbesondere wird die Parklücke durch im Fahrzeug verbaute Sensoreinrichtung vermessen. Die Sensoreinrichtung kann dabei zum Beispiel Ultraschall-, Radar-, Laser- und/oder Kamerasensoren aufweisen. Die Abmessungen der Parklücke sind somit bekannt und können mit den Abmessungen des Fahrzeuges verglichen werden. Insbesondere bei einem automatischen Anhalten des Fahrzeuges vor einer Parklücke, das Teil eines automatischen Einparkvorganges sein kann, wird durch den Vergleich der Abmessungen des Fahrzeuges und der Parklücke festgestellt, dass bei einem durchgeführten Einparkvorgang dem Fahrer nicht mehr genügend Platz zur Verfügung steht, um das Fahrzeug zu verlassen. Daher wird das Fahrzeug durch das Fahrerassistenzsystem oder durch den Fahrer selbst vor der Parklücke angehalten. Der Fahrer kann in dieser Anhalteposition das Fahrzeug verlassen. Nach Verlassen des Fahrzeuges durch den Fahrer wird das Fahrzeug autonom in die Parklücke eingeparkt. Dafür ist es nötig, durch die oben genannte Sensoreinrichtung die Parklücke und die Umgebung des Fahrzeuges ständig zu überwachen. Hierdurch kann sichergestellt werden, dass auch neu aufgetauchte Hindernisse in der Parklücke, zum Beispiel Personen, die die Parklücke durchqueren, detektiert und so Kollisionen vermieden werden können. Das autonome Einparken des Fahrzeuges setzt ferner voraus, dass im Fahrzeug eine Vorrichtung zur Ansteuerung der Quer- und Längsbewegung des Fahrzeuges vorhanden sind. Insbesondere müssen dafür zumindest die Lenkung, die Gangschaltung und die Beschleunigung des Fahrzeuges durch ein Fahrerassistenzsystem gesteuert werden können. Alternativ zur Steuerung durch ein Fahrerassistenzsystem ist beispielsweise auch eine Fernsteuerung durch den bereits ausgestiegenen Fahrer denkbar. Nach dem erfolgreich durchgeführten autonomen Einparkvorgang des Fahrzeuges in die Parklücke wird der Motor des Fahrzeuges abgestellt. Der Parkvorgang ist damit abgeschlossen. Durch ein erfindungsgemäßes Verfahren zum Bereitstellen einer Ausstiegsmöglichkeit aus einem Fahrzeug kann somit auch eine kleine Parklücke, die nur wenig größer ist als die Abmessungen des Fahrzeuges, zum Parken genützt werden. Dies stellt zum einen eine Erleichterung für den Fahrer des Fahrzeuges dar, da dadurch die Parkplatzsuche verkürzt werden kann. Ferner stellt es auch einen Vorteil für einen Parkplatzbetreiber dar, da der von ihm zur Verfügung gestellte Parkraum deutlich besser ausgenützt werden kann.

Erfindungsgemäß ist vorgesehen, dass, wenn erst nach Beendigung eines Einparkvorganges in die Parklücke ein Nichtvorhandensein der Ausstiegsmöglichkeit erkannt wird, die Parklücke vor Durchführung des Verfahrens durch Herausfahren verlassen wird. Oftmals kann es vorkommen, dass der Fahrer die Abmessungen der Parklücke zu groß einschätzt. Nach einem Einparkvorgang in die Parklücke durch den Fahrer oder durch ein semi-oder vollautomatisches Einparksystem stellt der Fahrer fest, dass er das Fahrzeug nicht verlassen kann. Um die Ausgangssituation für ein erfindungsgemäßes Verfahren zu schaffen, ist es daher vorgesehen , die Parklücke vor Durchführung des Verfahrens durch Herausfahren zu verlassen. Das Verfahren kann somit auch auf derartige Situationen angewandt werden, bei der erst nach einem Einparkvorgang in eine enge Parklücke die Unmöglichkeit eines Ausstiegsvorgangs für den Fahrer erkannt wird.

In einer bevorzugten Weiterentwicklung eines erfindungsgemäßen Verfahrens kann vorgesehen sein, dass das Herausfahren aus der Parklücke autonom oder semiautonom durchgeführt wird, auch wenn der Fahrer selbst noch im Fahrzeug sitzt. Dies stellt eine Erleichterung für den Fahrer dar, da er nicht vollständig für das Herausfahren verantwortlich ist. Voraussetzung dafür ist das Vorhandensein von Sensoren zur Überwachung der Parklücke und der Umgebung des Fahrzeuges, um Kollisionen mit Objekten in der Umgebung des Fahrzeuges zu verhindern. Insbesondere bei einer vollautonomen Durchführung des Herausfahrens der Parklücke ist wiederum auch ein Ansteuern der Quer- und Längsbewegung des Fahrzeuges durch ein Fahrerassistenzsystem nötig.

Ferner kann bei einem erfindungsgemäßen Verfahren vorgesehen sein, dass die Ausstiegsmöglichkeit auf der Fahrerseite und/oder auf der Fahrer- und der Beifahrerseite des Fahrzeuges bereitgestellt wird. Die Entscheidung, ob nur auf der Fahrerseite und/oder auf der Fahrer- und Beifahrerseite des Fahrzeuges eine Ausstiegsmöglichkeit bereitgestellt wird, kann sowohl durch den Fahrer als auch alternativ automatisch getroffen werden. Dabei kann zum Beispiel eine Sitzplatzbelegung, die durch Sensoren festgestellt wird, für eine automatische Entscheidung herangezogen werden. Eine Ausstiegsmöglichkeit nur auf der Fahrerseite ist zum Beispiel sinnvoll, wenn die Beifahrerseite unbesetzt ist und ein Bereitstellen einer Ausstiegsmöglichkeit auf der Beifahrerseite unnötige Rangierzüge nötig macht. Dies ist insbesondere der Fall, wenn die Parklücke und auch das Vorfeld der Parklücke auf der Beifahrerseite des Fahrzeuges durch eine Mauer begrenzt sind. Eine derartige Ausgestaltung des Verfahrens erhöht die Benutzerfreundlichkeit, da zum Beispiel, wie in obigen Fall gezeigt, unnötige Rangierzüge vermieden werden können.

Des Weiteren kann in einer besonders bevorzugten Ausgestaltung des erfindungsgemäßen Verfahrens vorgesehen sein, dass nach dem autonomen Einparken in die Parklücke ein autonomes Herausfahren des Fahrzeuges aus der Parklücke durchgeführt wird, damit zumindest dem Fahrer eine Einstiegsmöglichkeit in das Fahrzeug bereitgestellt wird. Eine derartige Weiterentwicklung des Verfahrens ist insbesondere dann sinnvoll, wenn sich das Umfeld der Parklücke bis zur Rückkehr des Fahrers zur Parklücke nicht verändert hat. In einem derartigen Fall besteht für den Fahrer keine Zugangsmöglichkeit zum Fahrzeug, da die Parklücke immer noch nur wenig größer ist als das Fahrzeug und somit keine Einstiegsmöglichkeit in das Fahrzeug vorhanden ist. Der Fahrer kann, zum Beispiel durch eine Fernbedienung, das Fahrzeug starten und ein autonomes Herausfahren des Fahrzeuges aus der Parklücke veranlassen. Dafür ist wiederum eine Auswertung von Daten von Sensoren nötig, um die Umgebung des Fahrzeuges derart zu überwachen, dass Kollisionen mit Objekten in der Umgebung des Fahrzeuges beim Herausfahren vermieden werden. Auch eine Ansteuerung der Lenkung der Beschleunigung sowie der Gangschaltung des Fahrzeuges ist für ein derartiges Herausfahren nötig. Nach dem autonomen Herausfahren aus der Parklücke kann der Fahrer dann in das Fahrzeug einsteigen und die Fahrt mit dem Fahrzeug unter eigener Kontrolle fortsetzen. Selbstverständlich ist neben einem autonomen Herausfahren auch alternativ ein durch den Fahrer ferngesteuertes Herausfahren des Fahrzeuges aus der Parklücke möglich.

Gemäß einem zweiten Aspekt der Erfindung wird die Aufgabe durch ein Fahrerassistenzsystem für ein Fahrzeug zum Bereitstellen einer Ausstiegsmöglichkeit aus einem Fahrzeug gelöst. Insbesondere ist das erfindungsgemäße Fahrerassistenzsystem derart ausgestaltet, dass es das vor einer Parklücke stehende Fahrzeug nach Aussteigen des Fahrers in die Parklücke einparkt. Das Fahrerassistenzsystem weist dabei insbesondere die nötigen Sensorkomponenten auf, um die Umgebung des Fahrzeuges zu vermessen und zu überwachen. Dadurch kann die Umgebung des Fahrzeuges im Fahrerassistenzsystem virtuell nachgebildet und der Parkvorgang berechnet werden. Dieser berechnete Parkvorgang wird zum Ansteuerung zumindest der Lenkung, der Gangschaltung und der Beschleunigung des Fahrzeuges verwendet. Das Fahrzeug kann autonom und somit völlig unabhängig vom Fahrer in die Parklücke einparken. Ein derartiges Fahrerassistenzsystem ermöglicht insbesondere das Einparken in Parklücken, die nur wenig größer sind als die Breite des Fahrzeuges. In einer derartigen Parklücke wäre dem Fahrer nach einem Einparkvorgang das Aussteigen nicht möglich, da insbesondere die Fahrertür nicht weit genug geöffnet werden kann. Durch ein erfindungsgemäßes Fahrerassistenzsystem wird daher insbesondere dem Fahrer die Nutzung von sehr engen Parklücken ermöglicht. Dadurch kann zum Beispiel die Zeit, die zur Parkplatzsuche verwendet wird, für den Fahrer verkürzt werden, da Parklücken, die ansonsten aufgrund ihrer geringen Breite nicht in Frage kämen, genutzt werden können.

Erfindungsgemäß ist vorgesehen, dass das erfindungsgemäße Fahrerassistenzsystem zumindest eine Sensoranordnung zur Vermessung und Überwachung der Parklücke und zumindest eine Einrichtung zur Steuerung der Längs- und Querbewegung des Fahrzeuges aufweist. Das Fahrerassistenzsystem kann das Fahrzeug autonom in die

Parklücke einfahren. Dafür ist es nötig, dass das Fahrerassistenzsystem die Umgebung des Fahrzeuges zum einen vermisst, um die Größe und relative Lage der Parklücke zum Fahrzeug zu bestimmen. Zum anderen ist während der autonomen Durchführung des Einparkvorganges eine ständige Überwachung der Umgebung des Fahrzeuges nötig, um Kollisionen mit Objekten, auch plötzlich auftretenden Objekten, zu verhindern. Dafür ist bei dem erfindungsgemäßen Fahrerassistenzsystem eine Sensoranordnung zur Vermessung und Überwachung der Parklücke vorgesehen. Die Sensoranordnung kann dabei insbesondere Ultraschall-, Radar-, Laser- oder Kamerasensoren aufweisen. Selbstverständlich können die verschiedenen Sensortypen auch in Kombination eingesetzt werden. Die Sensordaten werden dabei insbesondere in einer Auswerteeinheit gesammelt und ausgewertet, wodurch ein virtuelles Abbild der Parklücke und der Umgebung des Fahrzeuges gebildet werden kann. Mit Hilfe dieses virtuellen Abbildes werden der Parkvorgang und die dafür nötigen Längs- und Querbewegungen des Fahrzeuges berechnet. Um den Einparkvorgang auszuführen ist in dem Fahrerassistenzsystem zumindest eine Einrichtung zur Steuerung der Längs- und Querbewegung des Fahrzeuges vorgesehen. Dabei kann zum Beispiel ein Eingriff in die Fahrzeugelektronik derart vorgenommen werden, dass die Längs- und Querbewegungen des Fahrzeuges steuerbar sind. Ferner können selbstverständlich auch eigene Steuerungen der Lenkung, der Gangschaltung und/oder der Beschleunigungsregelung des Fahrzeuges vorgesehen sein. Ein derartiges Fahrerassistenzsystem ist in der Lage, autonom in die Parklücke einzuparken und somit den Fahrer zu entlasten.

Darüber hinaus kann bei einem erfindungsgemäßen Fahrerassistenzsystem vorgesehen sein, dass das Fahrerassistenzsystem auf im Fahrzeug bereits vorhandene Sensor- und/oder Steuerungseinrichtungen zugreift. Dadurch müssen nicht für das erfindungsgemäße Fahrerassistenzsystem eigene Sensor- und/oder Steuerungseinrichtungen vorgesehen werden. Dieses stellt eine deutliche Kostenreduktion dar. So können zum Beispiel die Sensoranordnungen, die auch für die normale Einparkhilfe vorgesehen sind, auch für das erfindungsgemäße Fahrerassistenzsystem verwendet werden. Auch die Steuerungseinrichtungen, die insbesondere die Längs- und Querbewegung des Fahrzeuges steuern, können mit anderen Systemen des Fahrzeuges, wie zum Beispiel einem normalen Parkassistenten, geteilt werden.

Ferner kann bei einem erfindungsgemäßen Fahrerassistenzsystem vorgesehen sein, dass das Fahrerassistenzsystem eine Anzeigeeinrichtung und eine der Anzeigeeinrichtung zugeordnete Eingabeeinrichtung aufweist, wobei durch die Eingabevorrichtung durch den Fahrer eine, insbesondere alternative, Parkendposition in der Parklücke vorgebbar ist. Als Anzeigeeinrichtung kann dabei insbesondere ein Bildschirm vorgesehen sein. Die der Anzeigeeinrichtung zugeordnete Eingabeeinrichtung kann insbesondere als berührungsempfindlicher Bildschirm ausgestaltet sein. Durch eine derartige Ausgestaltung des Fahrerassistenzsystems ist es möglich, die Position des Fahrzeuges in der Parklücke nach dem Wunsch des Fahrers spezifisch einzustellen. So ist es zum Beispiel denkbar, dass in einer Parklücke, die eine Größe aufweist, die nur wenig größer ist als die Breite des Fahrzeuges, eine mittige Positionierung des Fahrzeuges in der Parklücke ein Aussteigen sowohl auf der Fahrer- als auch auf der Beifahrerseite verhindert. In einer derartigen Situation kann es möglich sein, dass bereits ein leichtes Versetzen des Fahrzeuges derart, dass die Beifahrerseite näher am die Parklücke begrenzenden Hindernis geparkt wird, ein Aussteigen auf der Fahrerseite möglich macht. Selbstverständlich kann das Fahrerassistenzsystem auch derart ausgestaltet sein, dass eine weite Umgebung des Fahrzeuges überwacht und in der weiten Umgebung des Fahrzeuges Parklücken detektiert werden. In einem derartigen Fall kann es vorgesehen sein, dass auch eine alternative Parklücke, die an der Anzeigeeinrichtung angezeigt wird durch die der Anzeigeeinrichtung zugeordnete Eingabeeinrichtung ausgewählt werden kann. Das Fahrerassistenzsystem kann in einem derartigen Fall einen Einparkvorgang in die alternativ gewählte Parklücke ausführen und/oder unterstützen. Durch diese Wahlmöglichkeiten wird wiederum der Nutzen für den Fahrer des Fahrzeuges erhöht.

In einer besonders bevorzugten Ausgestaltung eines erfindungsgemäßen Fahrerassistenzsystems kann vorgesehen sein, dass das Fahrerassistenzsystem zum Ausführen eines Verfahrens gemäß dem ersten Aspekt der Erfindung ausgestaltet ist. Sämtliche Vorteile, die zu einem Verfahren gemäß dem erstens Aspekt der Erfindung beschrieben worden sind, ergeben sich somit selbstverständlich auch für ein erfindungsgemäßes Fahrerassistenzsystem, das zur Ausführung eines derartigen Verfahrens ausgestaltet ist.

### BEVORZUGTE AUSFÜHRUNGSBEISPIELE

Das erfindungsgemäße Verfahren und seine Weiterbildungen sowie deren Vorteile und das erfindungsgemäße Fahrerassistenzsystem mit seinen Weiterbildungen sowie dessen Vorteile werden nachfolgend anhand von Zeichnungen näher erläutert. Es zeigen jeweils schematisch:
- Fig. 1: ein erfindungsgemäßes Fahrzeug in einer engen Parklücke,
- Fig. 2: ein erfindungsgemäßes Fahrzeug vor einer engen Parklücke und
- Fig. 3: ein erfindungsgemäßes Fahrzeug beim Verlassen einer engen Parklücke.

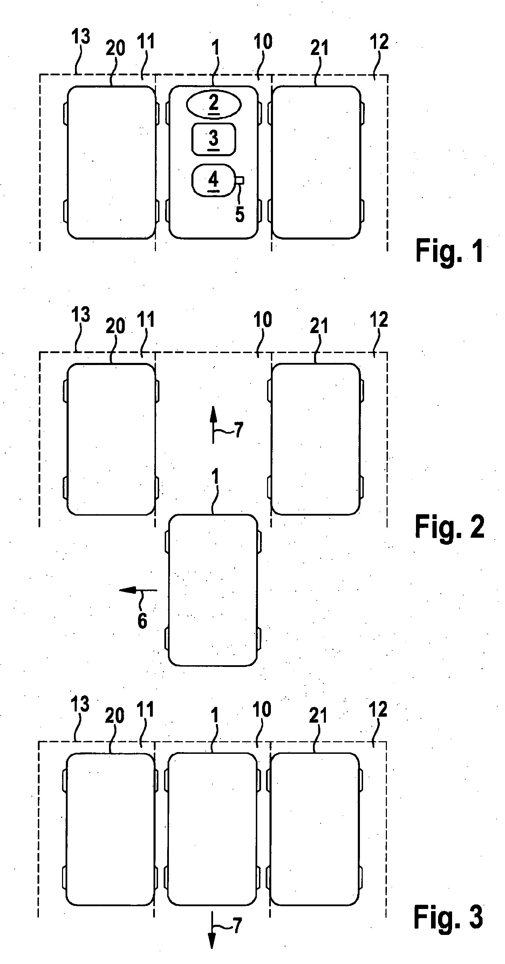

Elemente mit gleicher Funktion und Wirkungsweise sind in den Fig. 1, 2 und 3 jeweils mit denselben Bezugszeichen versehen.

In der Fig. 1 ist ein erfindungsgemäßes Fahrzeug 1 in einer engen Parklücke 10 gezeigt. Das erfindungsgemäße Fahrzeug 1 weist dabei insbesondere ein Sensorsystem 2, ein Steuerungssystem 3, eine Anzeigevorrichtung 4 und eine der Anzeigevorrichtung 4 zugeordnete Eingabevorrichtung 5 auf. Das Sensorsystem 2 ist dabei insbesondere derart ausgestaltet, dass es die Umgebung des Fahrzeuges 1 und insbesondere die Parklücke 10 vermessen und überwachen kann. Als Sensoren des Sensorsystems 2 sind dabei Ultraschall-, Radar-, Laser- und/oder Kamerasensoren denkbar. Auch Kombinationen verschiedener Sensorarten sind selbstverständlich möglich. Neben der Parklücke 10 befinden sich weitere Parklücken 11, 12, in die weitere Fahrzeuge 20, 21 geparkt sind. Die Parklücken 10, 11, 12 sind jeweils durch Begrenzungslinien 13 gekennzeichnet und begrenzt. Die benachbarten Fahrzeuge 20, 21 in den weiteren Parklücken 11, 12 sind dabei derart geparkt, dass die Parklücke 10 sehr eng ist. Die Parklücke 10 ist nur ein wenig breiter als das Fahrzeug 1. In dem abgebildeten Zustand, das heißt bei drei geparkten Fahrzeugen 1, 20, 21, ist ein Aussteigen aus dem Fahrzeug 1 für den Fahrer des Fahrzeuges 1 im geparkten Zustand nicht möglich. Bei einer Parkplatzsuche hätte daher der Fahrer eines Fahrzeuges 1 ohne ein erfindungsgemäßes Fahrerassistenzsystem diese Parklücke 10 nicht gewählt. Dadurch wäre die Zeit, die er für die Parkplatzsuche aufwenden müsste, erhöht worden. Auch wäre der vom Parkplatzbetreiber zur Verfügung gestellte Raum nicht optimal ausgenutzt worden.

Fig. 2 zeigt wiederum ein Fahrzeug 1, das analog zu Fig. 1 mit einem erfindungsgemäßen Fahrerassistenzsystem ausgestattet ist. Die einzelnen Komponenten des Fahrerassistenzsystems sind nicht mehr mit abgebildet. Das Fahrzeug 1 befindet sich vor der Parklücke 10, die analog zu Fig. 1 ausgestaltet ist. Die Parklücke 10 ist, wie in Fig. 1 beschrieben, sehr eng, das heißt nur wenig breiter als die Breite des Fahrzeuges 1. Dies ist bedingt durch die suboptimalen Parkpositionen der weiteren Fahrzeuge 20, 21 in den angrenzenden Parklücken 11, 12. Vor der Parklücke 10 kann jedoch dem Fahrer des Fahrzeuges 1 eine Ausstiegsmöglichkeit 6 bereitgestellt werden. Ausstiegsmöglichkeiten auf der Beifahrerseite des Fahrzeuges 1 sind selbstverständlich ebenfalls möglich, jedoch nicht extra mit abgebildet. Nach dem Aussteigen des Fahrers des Fahrzeuges 1 wird das Fahrzeug 1 durch das Fahrerassistenzsystem autonom in die Parklücke 10 eingeparkt. Dafür wird die Parklücke 10 und die Umgebung des Fahrzeuges 1 durch das Sensorsystem 2 vermessen und überwacht. Basierend auf den Überwachungsergebnissen wird der Einparkvorgang berechnet und durch das Steuerungssystem 3 wird die Quer- und Längssteuerung des Fahrzeuges 1 angesteuert. Insbesondere ist dabei eine Ansteuerung der Lenkung, der Gangschaltung und der Beschleunigungsregelung des Fahrzeuges 1 nötig. Das Fahrzeug 1 fährt dabei nach vorne in Fahrtrichtung (Pfeil 7) in die Parklücke 10. Nach Beendigung des Einfahrens in die Parklücke 10 befindet sich das Fahrzeug 1 in seiner Parkendposition, wie sie in Fig. 1 gezeigt ist.

Fig. 3 zeigt ein Fahrzeug 1 mit einem erfindungsgemäßen Fahrerassistenzsystem (nicht mit abgebildet) beim Verlassen einer Parklücke 10. Die Parklücke 10 entspricht dabei der Parklücke, wie sie in den Fig. 1 und 2 bereits beschrieben worden ist. Durch die suboptimale Positionierung der weiteren Fahrzeuge 20, 21 in den benachbarten Parklücken 11, 12 ist die Parklücke 10 sehr eng, ein Ein- bzw. Aussteigen aus dem geparkten Fahrzeug 1 ist nicht möglich. Dargestellt ist ein Verlassen der Parklücke 10 durch das Fahrzeug 1, dessen Fahrtrichtung 7 durch einen Pfeil angedeutet ist. Dieses Verlassen kann insbesondere aus zwei Gründen erfolgen. So kann zum einen der Fahrer des Fahrzeuges 1 nach dem Einparkvorgang in die Parklücke 10 festgestellt haben, dass er das Fahrzeug 1, bedingt durch den geringen Platz neben dem Fahrzeug 1, nicht verlassen kann. Daher kann ein Ausfahren aus der Parklücke 10 nötig sein, um das Fahrzeug 1 zu verlassen und das Fahrzeug 1 im Anschluss daran durch das erfindungsgemäße Fahrerassistenzsystem wieder autonom in die Parklücke 10 einparken zu lassen. Eine weitere Möglichkeit kann sein, dass der Fahrer des Fahrzeuges 1 wieder zu seinem parkenden Fahrzeug 1 zurückkommt. Der Fahrer gibt in diesem Fall, zum Beispiel durch eine Fernbedienung, dem Fahrerassistenzsystem des Fahrzeuges 1 den Befehl, das Fahrzeug 1 autonom aus der Parklücke 10 herauszufahren. Auch eine direkte Fernsteuerung des Fahrzeugs 1 durch den Fahrer ist denkbar. Nach dem Herausfahren des Fahrzeuges 1 aus der Parklücke 10 kann der Fahrer dann in das Fahrzeug 1 einsteigen und die Kontrolle über die Quer- und/oder Längssteuerung des Fahrzeuges 1 wieder selbst übernehmen. Dadurch ist sichergestellt, dass er in sein Fahrzeug 1 auch wieder einsteigen kann, auch wenn es in einer engen Parklücke 10 geparkt ist.

Die voranstehend genannten Ausführungsformen beschreiben die vorliegende Erfindung im Rahmen von Beispielen. Selbstverständlich können Merkmale zu den einzelnen Ausführungsformen, sofern technisch sinnvoll, frei miteinander kombiniert werden, ohne den Rahmen der vorliegenden Erfindung zu verlassen.

## Patentansprüche

1. Verfahren zum Bereitstellen einer Ausstiegsmöglichkeit (6) aus einem Fahrzeug (1), **gekennzeichnet durch** folgende Schritte:
a) Anhalten des Fahrzeuges (1) vor einer Parklücke (10),
b) Bereitstellen der Ausstiegsmöglichkeit (6),
c) Autonomes Einparken des Fahrzeuges (1) in die Parklücke (10)
wobei eine Sensoranordnung (2) zur Vermessung und Überwachung der Parklücke (10) vorgesehen ist und wobei die **durch** die Sensoranordnung (2) erfassten Sensordaten gesammelt und ausgewertet werden, wodurch ein virtuelles Abbild der Parklücke und der Umgebung des Fahrzeuges (1) gebildet wird und wobei mittels des virtuellen Abbildes der Parkvorgang und die dafür nötigen Längs- und Querbewegungen des Fahrzeuges (1) berechnet werden,
**dadurch gekennzeichnet, dass** wenn erst nach Beendigung eines Einparkvorgangs in die Parklücke (10) ein Nichtvorhandensein der Ausstiegsmöglichkeit (6) erkannt wird, die Parklücke (10) vor Durchführung des Verfahrens **durch** Herausfahren verlassen wird.

2. Verfahren nach Anspruch 1, **dadurch gekennzeichnet, dass** das Herausfahren aus der Parklücke (10) autonom oder semiautonom durchgeführt wird.

3. Verfahren nach wenigstens einem der Ansprüche 1 oder 2, **dadurch gekennzeichnet, dass** die Ausstiegsmöglichkeit (6) auf der Fahrerseite und/oder auf der Fahrer- und der Beifahrerseite des Fahrzeuges (1) bereitgestellt wird.

4. Verfahren nach wenigstens einem der Ansprüche 1 bis 3, **dadurch gekennzeichnet, dass** nach dem autonomen Einparken in die Parklücke (10) ein autonomes Herausfahren des Fahrzeuges (1) aus der Parklücke (10) durchgeführt wird, damit zumindest dem Fahrer eine Einstiegsmöglichkeit (6) in das Fahrzeug (10) bereitgestellt wird.

5. Fahrerassistenzsystem für ein Fahrzeug (1) zum Bereitstellen einer Ausstiegsmöglichkeit (6) aus einem Fahrzeug (10), wobei das Fahrerassistenzsystem das vor einer Parklücke (10) stehende Fahrzeug (1) nach Aussteigen des Fahrers in die Parklücke (10) einparkt, wobei das Fahrerassistenzsystem zumindest eine Sensoranordnung (2) zur Vermessung und Überwachung der Parklücke (10) und zumindest eine Einrichtung (3) zur Steuerung der Längs- und Querbewegung des Fahrzeuges (1) aufweist, wobei von der Sensoranordnung (2) erfasste Sensordaten in einer Auswerteeinheit gesammelt und ausgewertet werden, wodurch ein virtuelles Abbild der Parklücke und der Umgebung des Fahrzeuges gebildet wird und mittels des virtuellen Abbildes der Parkvorgang und die dafür nötigen Längs- und Querbewegungen des Fahrzeuges berechnet werden, **dadurch gekennzeichnet, dass** wenn erst nach Beendigung eines Einparkvorgangs in die Parklücke (10) ein Nichtvorhandensein der Ausstiegsmöglichkeit (6) durch das Fahrerassistenzsystem erkannt wird, die Parklücke (10) durch Herausfahren verlassen wird, so dass der Fahrer das Fahrzeug verlassen kann bevor das Fahrerassistenzsystem das Fahrzeug (1) in die Parklücke (10) einparkt.

6. Fahrerassistenzsystem nach wenigstens einem der Ansprüche 5, **dadurch gekennzeichnet, dass** das Fahrerassistenzsystem auf im Fahrzeug (1) bereits vorhandene Sensor- (2) und/oder Steuerungseinrichtungen (3) zugreift.

7. Fahrerassistenzsystem nach wenigstens einem der Ansprüche 5 oder 6, **dadurch gekennzeichnet, dass** das Fahrerassistenzsystem eine Anzeigeeinrichtung (4) und eine der Anzeigeeinrichtung zugeordnete Eingabeeinrichtung (5) aufweist, wobei durch die Eingabevorrichtung (5) durch den Fahrer eine, insbesondere alternative, Parkendposition in der Parklücke (10) vorgebbar ist.

8. Fahrerassistenzsystem nach wenigstens einem der Ansprüche 5 bis 7, **dadurch gekennzeichnet, dass** das Fahrerassistenzsystem zur Ausführung eines Verfahrens gemäß einem der Ansprüche 1 bis 4 ausgestaltet ist.

## Claims

1. Method for making available an exit possibility (6) from a vehicle (1), **characterized by** the following steps:
a) stopping the vehicle (1) before a parking space (10),
b) making available the exit possibility (6),
c) autonomous parking of the vehicle (1) into the parking space(10),
wherein a sensor arrangement (2) is provided for measuring and monitoring the parking space (10), and wherein the sensor data which is acquired by the sensor arrangement (2) is collected and evaluated, wherein a virtual image of the parking space and of the surroundings of a vehicle (1) is formed, and wherein the parking process and the longitudinal and transverse movements of a vehicle (1) which are necessary for it are calculated by means of the virtual image,
**characterized in that** if absence of the exit possibility (6) is not detected until after the ending of a parking process into the parking space(10), the parking space (10) is exited by driving out before the method is carried out.

2. Method according to Claim 1, **characterized in that** the driving out from the parking space (10) is carried out autonomously or semi-autonomously.

3. Method according to at least one of Claims 1 or 2, **characterized in that** the exit possibility (6) is made available on the driver's side and/or on the driver's side and the front seat passenger's side of the vehicle (1).

4. Method according to at least one of Claims 1 to 3, **characterized in that** after the autonomous parking into the parking space(10), autonomous driving of the vehicle (1) out of the parking space (10) is carried out so that an entry possibility (6) into the vehicle (10) is made available at least to the driver.

5. Driver assistance system for a vehicle (1) for making available an exit possibility (6) from the vehicle (10), wherein the vehicle (1) which is located in front of a parking space (10) is parked into the parking space(10) by the driver assistance system after the driver has exited, wherein the driver assistance system has at least one sensor arrangement (2) for measuring and monitoring the parking space (10) and at least one device (3) for controlling the longitudinal and lateral movement of the vehicle (1), wherein sensor data acquired by the sensor arrangement (2) is collected in an evaluation unit and evaluated, wherein a virtual image of the parking space and of the surroundings of the vehicle is formed and the parking process and the longitudinal and lateral movements of the vehicle which are necessary for said process are calculated by means of the virtual image, **characterized in that** if absence of the exit possibility (6) is not detected by the driver assistance system until after a parking process into the parking space (10) has ended, the parking space (10) is exited by driving out, with the result that the driver can exit the vehicle before the driver assistance system parks the vehicle (1) into the parking space (10).

6. Driver assistance system according to Claim 5, **characterized in that** the driver assistance system accesses sensor devices (2) and/or control devices (3) which are already present in the vehicle (1).

7. Driver assistance system according to at least one of Claims 5 or 6, **characterized in that** the driver assistance system has a display device (4) and an input device (5) which is assigned to the display device, wherein by means of the input device (5) the driver can predefine an, in particular alternative, parking end position into the parking space (10).

8. Driver assistance according to at least one of Claims 5 to 7, **characterized in that** the driver assistance system is configured to execute a method according to one of Claims 1 to 4.

## Revendications

1. Procédé de mise à disposition d'une possibilité de descente (6) hors d'un véhicule (1), **caractérisé par** les étapes suivantes :
a) arrêt du véhicule (1) devant une place de stationnement (10) ;
b) mise à disposition de la possibilité de descente (6) ;
c) stationnement autonome du véhicule (1) dans la place de stationnement (10), un agencement de capteurs (2) étant prévu pour mesurer et surveiller la place de stationnement (10) et les données de capteur détectées par l'agencement de capteurs (2) étant cumulées et analysées, permettant de former une représentation virtuelle de la place de stationnement et de l'environnement du véhicule (1) et le processus de stationnement et les mouvements longitudinaux et transversaux du véhicule (1) nécessaires à son stationnement étant calculés à l'aide de la représentation virtuelle ;
**caractérisé en ce qu'**en cas de détection d'absence de possibilité de descente (6) dans la place de stationnement (10) à la fin d'un processus de stationnement, le conducteur sort du véhicule et de la place de stationnement (10) avant la mise en oeuvre du procédé.

2. Procédé selon la revendication 1, **caractérisé en ce que** la sortie de la place de stationnement (10) est exécutée de façon autonome ou semi-autonome.

3. Procédé selon au moins l'une quelconque des revendications 1 ou 2, **caractérisé en ce que** la possibilité de descente (6) du côté du conducteur et/ou du côté du conducteur et du côté du passager du véhicule (1) est mise à disposition.

4. Procédé selon au moins l'une quelconque des revendications 1 à 3, **caractérisé en ce qu'**après le stationnement autonome dans la place de stationnement (10), une sortie autonome du véhicule (1) hors de la place de stationnement (10) est exécutée, donnant ainsi au conducteur au moins une possibilité de montée (6) dans le véhicule (10).

5. Système d'assistance au conducteur pour un véhicule (1) afin de mettre à disposition une possibilité de descente (6) hors d'un véhicule (10), le système d'assistance au conducteur stationnant le véhicule (1) se trouvant devant une place de stationnement (10) dans la place de stationnement (10) après descente du conducteur, le système d'assistance au conducteur comportant au moins un agencement de capteurs (2) pour mesurer et surveiller la place de stationnement (10) et au moins un dispositif (3) pour commander le mouvement longitudinal et transversal du véhicule (1), les données de capteur détectées par l'agencement de capteurs (2) étant cumulées et analysées dans une unité d'analyse, formant ainsi une représentation virtuelle de la place de stationnement et de l'environnement du véhicule et le processus de stationnement et les mouvements longitudinaux et transversaux du véhicule nécessaires à son stationnement étant calculés à l'aide de la représentation virtuelle, **caractérisé en ce que** lorsque le système d'assistance au conducteur détecte l'absence de possibilité de descente (6) dans la place de stationnement (10) à la fin d'un processus de stationnement, le conducteur sort de la place de stationnement (10) et du véhicule avant que le système d'assistance au conducteur gare le véhicule (1) dans la place de stationnement (10).

6. Système d'assistance au conducteur selon la revendication 5, **caractérisé en ce que** le système d'assistance au conducteur utilise les capteurs (2) et/ou les dispositifs de commande (3) déjà présents dans le véhicule (1).

7. Système d'assistance au conducteur selon au moins l'une quelconque des revendications 5 ou 6, **caractérisé en ce que** le système d'assistance au conducteur comporte un dispositif d'affichage (4) et un dispositif de saisie (5) associé au dispositif d'affichage, une position de fin de stationnement, notamment alternative, dans la place de stationnement (10) pouvant être prédéfinie par le conducteur par le biais du dispositif de saisie (5).

8. Système d'assistance au conducteur selon au moins l'une quelconque des revendications 5 à 7, **caractérisé en ce que** le système d'assistance au conducteur est configuré pour mettre en oeuvre le procédé selon l'une quelconque des revendications 1 à 4.
